# EUROPÄISCHE PATENTSCHRIFT

(11) **EP 1 417 778 B1**
(45) Veröffentlichungstag und Bekanntmachung des Hinweises auf die Patenterteilung: **15.03.2006**
(21) Anmeldenummer: 02755001.1
(22) Anmeldetag: 19.08.2002
(51) Int. Cl.: H04B 7/005, H04L 1/18

(54) **VERFAHREN UND VORRICHTUNGEN ZUM EINSTELLEN DER SENDELEISTUNG IN EINEM KOMMUNIKATIONSSYSTEM**
METHOD AND DEVICES FOR CONTROLLING THE EMISSION POWER OF A COMMUNICATION SYSTEM
PROCEDE ET DISPOSITIFS DE REGLAGE DE LA PUISSANCE D'EMISSION D'UN SYSTEME DE COMMUNICATION

(30) Priorität: 17.08.2001 EP 01119922
(43) Veröffentlichungstag der Anmeldung: 12.05.2004
(73) Patentinhaber: SIEMENS AKTIENGESELLSCHAFT, 80333 München (DE)
(72) Erfinder: ZIRWAS, Wolfgang, 82194 Gröbenzell (DE)
(86) Internationale Anmeldenummer: PCT/EP2002/009261
(87) Internationale Veröffentlichungsnummer: WO 2003/017524

(56) Entgegenhaltungen:
- EP-A- 0 996 240
- EP-A- 1 063 788
- WO-A-00/19634
- US-A- 5 898 925
- US-A- 6 084 865
- US-A- 6 101 168
- US-B1- 6 249 894
- US-B1- 6 272 354

## Beschreibung

Die Erfindung bezieht sich auf ein Verfahren und auf Vorrichtungen zum Einstellen der Sendeleistung in einem Kommunikationssystem.

Bei Kommunikationssystemen, insbesondere gemäß dem Standard GSM (Global System for Mobile communications) oder dem UMTS (Universal Mobile Telecommunications System) werden Daten bzw. Informationen zwischen einer teilnehmerseitigen Station und einer netzseitigen Basisstation über Funkschnittstellen übertragen. Beim Einstellen der erforderlichen Sendeleistung ist dabei jeweils die sogenannten Shannon-Kapazität zu berücksichtigen. Mit der Shannon-Kapazität wird angegeben, wieviel Daten bzw. Informationen maximal über einen Kanal gesendet werden können, wenn auf den Kanal übliche Störeinflüsse, u.a. Rauschen (Noise) einwirken. Die Shannon-Kapazität gibt somit ein Verhältnis von Sendeleistung zu Rauschleistung an, das nicht unterschritten werden darf, wenn die Empfangsqualität ausreichend sein soll.

Mit Blick darauf, dass die teilnehmerseitigen Stationen zumeist mobile Stationen mit einer tragbaren Energiequelle sind, ist die Forschung seit langer Zeit darauf gerichtet, das erforderliche Signal-/Noise-Verhältnis für Datenübertragungen bei drahtlosen Funk-Kommunikationssystemen zu minimieren. Neben den vorstehend genannten Funk-Kommunikationssystemen betrifft dies beispielsweise auch Datennetze, z. B. gemäß dem Standard HiperLAN2. Um mit möglichst niedriger Sendeleistung senden zu können, wurden verschiedene Verfahren zur Fehlerkorrektur entwickelt, beispielsweise die sogenannten vorwärtsgerichteten Fehlerkorrekturverfahren (FEC: Forward Error Correction) unter den Bezeichnungen Block-FEC, Convolutional-FEC, Turbo-FEC oder Codierungs-FEC. Weitere Fehlerkorrekturverfahren sind sogenannte ARQ-Schemata (ARQ: Automatic Repeat Request), bei denen redundante Daten übertragen werden, adaptive Modulationsverfahren und so weiter.

Bei den derartigen Fehlerverfahren gibt es insbesondere Fehlerkorrektuverfahren, bei denen ein Rückwärtskanal von dem Empfänger zu dem ursprünglichen Sender verwendet wird, beispielsweise um eine Neuübertragung gestörter Datensymbole oder im Fall inkrementaler Redundanz nach mehr zu übersendender Redundanz nachfragen zu können, wie z.B. bei ARQ-Verfahren.

Aus WO 00/19634 ist ein Verfahren und eine Vorrichtung zum Übertragen von Informationen über eine Kommunikationsverbindung bekannt. Dabei umfassen die Informationen zu übertragende Informationen zu einer ersten Leistungsstärke. Das Verfahren umfasst auch die Überwachung des korrekten Empfangs der übertragenen Informationen sowie das Übertragen weiterer Informationen zu einer zweiten größeren Leistungsstärke als die für die ursprüngliche Übertragung benutzte, wenn kein korrekter Empfang erfolgt ist. Dieses Verfahren bzw. Vorrichtung ist jedoch keine Lösung für das oben dargestellte Problem.

Die Aufgabe der Erfindung besteht darin, ein alternatives Verfahren zur Reduzierung der erforderlichen Sendeleistung insbesondere einer mobilen Station sowie entsprechende Vorrichtungen zum Durchführen eines solchen Verfahrens vorzuschlagen.

Diese Aufgabe wird durch ein Verfahren zum Regeln der Sendeparameter zur Aussendung von Daten mit den Merkmalen des Patentanspruchs 1 bzw. Vorrichtungen zum Durchführen eines solchen Verfahrens mit den Merkmalen der Patentansprüche 13 und 14 gelöst.

Das Verfahren zum Einstellen der Sendeleistung einer sendenden Station sieht vor, dass die sendende Station ein Signal zur Übertragung von Daten zu einer empfangenden Station überträgt, die empfangende Station einen Messwert des empfangenen Signals, der abhängig von den durch das Signal übertragenen Daten ist, bestimmt und zu der sendenden Station als Regelinformation für die Einstellung ihrer Sendeleistung überträgt. Die sendende Station sendet nach dem Empfang des Messwertes zuvor ausgesandter Daten Korrekturdaten zu diesen zuvor gesendeten Daten zu der empfangenden Station, die abhängig vom jeweiligen Messwert sind.

Bei dem Messwert kann es sich im Falle einer Amplitudenmodulation des von der sendenden Station übertragenen Signals um analoge Leistungswerte des empfangenen Signals, im Folgenden auch Empfangs-Leistungs-Amplitudenwerte genannt, handeln. Im Falle einer Phasenmodulation des zu übertragenden Signals kann es sich beispielsweise auch um den Phasenwinkel handeln, der für ein empfangenes Datum in der empfangenden Station ermittelt wurde. Beim analog an die sendende Station übermittelten Messwert handelt es sich daher um einen solchen, der zwar von den mit dem Signal an die empfangende Station zu übertragenden Daten abhängt, der aber vor der Demodulation in der empfangenden Station ermittelt wird.

Bei einer Phasenmodulation werden oft jeweils mehrere zu übertragende Daten zu einem Modulationssymbol zusammengefasst, das dann anschließend für die Modulation der Trägerschwingung verwendet wird. In diesem Fall bezieht sich der erfindungsgemäße Messwert auf eines der mit dem Signal empfangenen Symbole. Die einzelnen Daten des Modulationssymbols werden ja erst nach erfolgter Demodulation wieder gewonnen, die nach der Ermittlung des Messwertes erfolgt.

Durch das Zurücksenden von Messwerten (z.B. in Form analoger Leistungswerte von empfangenen Daten) zu einer diese Daten ursprünglich sendenden Station kann die ursprünglich sendende Station direkt überprüfen, ob die ausgesandten Daten ausreichend korrekt empfangen wurden. Falls nicht, kann für nachfolgende Sendevorgänge eine entsprechende Sendeleistungskorrektur vorgenommen werden. Die Überprüfung, ob eine ausreichende Empfangsqualität vorliegt, wird somit nicht empfängerseitig sondern senderseitig vorgenommen.

Vorteilhafte Ausgestaltungen sind Gegenstand abhängiger Ansprüche.

Das Zurücksenden der Messwerte (z.B. in Form der analogen Leistungswerte) kann dabei derart durchgeführt werden, dass weitere Störeinflüsse bei der Übertragung der Messwerte vernachlässigbar sind, so dass in der sendenden Station die zurückgesendeten Messwerte korrekt empfangen werden. Um dies zu ermöglichen, wird vorzugsweise die Zurücksendung von der empfangenden Station mit einer wesentlich höheren Sendeleistung durchgeführt, als der Sendeleistung, mit der die ursprünglich gesendeten Daten von der sendenden Station ausgesendet wurden. Zweckmäßig ist auch die Verwendung von Kodierungs- und/oder Redundanzverfahren zum Sicherstellen einer fehlerfreien Zurücksendung der Messwerte in Rückwärtsrichtung. Diese Vorgehensweise ermöglicht eine einerseits sehr niedrige Sendeenergie bei der sendenden Station zu verwenden, für die der Energieverbrauch möglichst zu reduzieren ist, und andererseits die Rücksendung der Messwerte unabhängig von dem erforderlichen Energieaufwand vorzunehmen. Dies ist von Vorteil, wenn es sich bei der sendenden Station um eine mobile Teilnehmerstation mit begrenzter Batterieversorgung und bei der empfangenden Station um eine Basisstation ohne Beschränkung der Energieversorgung handelt.

Für den Fall einer durch die sendende Station festgestellten und nicht tolerierbaren Störung bei der ursprünglichen Aussendung von Daten über die Schnittstelle kann die sendende Station Korrekturdaten zu den zuvor gesendeten Daten zur mit ihr kommunizierenden empfangenden Station aussenden. Derartige Korrekturdaten können aus einem Korrekturfaktor oder einem additiven Korrekturwert bestehen. Möglich ist es jedoch auch, als Korrekturdaten einfach die ursprünglichen Daten erneut zu übersenden, beispielsweise mit einer höheren Sendeenergie.

Besonders zweckmäßig erscheint (im Falle, dass der Messwert ein analoger Leistungswert ist) jedoch das wiederholte Senden der ursprünglichen Daten als Korrekturdaten, wobei die Korrekturdaten dann aus den ursprünglichen Daten bestehen, denen vorteilhafterweise ein entsprechender Differenzbetrag zwischen dem ursprünglich gesendeten analogen Leistungswert und dem empfängerseitig empfangenen analogen Leistungswert hinzugefügt bzw. abgezogen wird, so dass empfängerseitig eine Addition der empfangenen Daten gleichen Datenursprungs vorgenommen werden kann. Das Addieren eines ursprünglichen Datenwertes und eines solchen Korrekturdatenwertes sowie die Division durch zwei würde empfängerseitig zu einem korrigierten Datenwert führen, der für den Fall, dass die Übertragung der Korrekturdaten fehlerfrei erfolgt ist, den ursprünglich gesendeten Datenwert erzeugt.

Besonders zweckmäßig ist dabei jedoch nicht nur die zweimalige Übertragung des Datenwertes als Datenwert und als Korrekturdatenwert, sondern die mehrmalige Übertragung dieses Datenwertes mit jeweils angewendeter Korrektur. Dabei kann jeweils nach dem Empfang des erstmals übersendeten Datenwertes sowie der später empfangenen Korrekturdatenwerten eine Übertragung der empfangenen analogen Leistungswerte in Rückwärtsrichtung zu der sendenden Station vorgenommen werden, so dass diese jeweils auf die nachfolgend zu übersendenden Korrekturdaten der mehrfachen Übertragungsfolge einen erneuten entsprechenden Korrekturwert aufaddieren bzw. davon subtrahieren kann. Je mehr derartig übertragene Daten- bzw. Korrekturdatenwerte empfängerseitig gestapelt werden, desto geringer wird letztendlich der Einfluss durch das Rauschen auf der Funkschnittstelle.

Insbesondere mit Blick auf den letzten zu versendenden Korrekturdatenwert, für den keine Zurückübertragung von dessen empfängerseitig empfangenen Messwert (z.B. als analogen Leistungswert) erfolgt, ist auch eine statistische Auswertung durchführbar, um einen nicht zufallsbedingten Störwert feststellen zu können oder einen nicht zufallsbedingten additiven oder multiplikativen Störwert feststellen zu können. Damit können dann die nachfolgend zu übertragenden Korrekturdaten, insbesondere der zuletzt zu übertragende Korrekturdatenwert zusätzlich zu dem Ergebnis der letzten Zurückübertragung korrigiert werden.

Die erfindungsgemäße sendende Station und empfangende Station weisen die für die Durchführung des erfindungsgemäßen Verfahrens notwendigen Komponenten auf und sind zu dessen Durchführung entsprechend ausgebildet.

Als sendende Station mit niedriger Sendeleistung ist insbesondere eine Kamera zum optischen Aufnehmen von Bildern und/oder Bildfolgen und optional Tonsignalen zum elektronischen Ausgeben zuvor aufgenommener Bilder an eine entfernte Kommunikationssystemeinrichtung als empfangende Station über eine Funkschnittstelle vorteilhaft. Auf diese Art und Weise können Bilder mit hoher Auflösung, also Bilder mit einem sehr hohen Speicherbedarf aufgenommen und abgespeichert werden, ohne den bei derartigen Kameras in der Regel nur sehr begrenzt verfügbaren Speicherraum mit bereits wenigen einzelnen Bildern oder bei entsprechend hoher Auflösung mit nicht einmal einem einzigen Bild zu überfüllen.

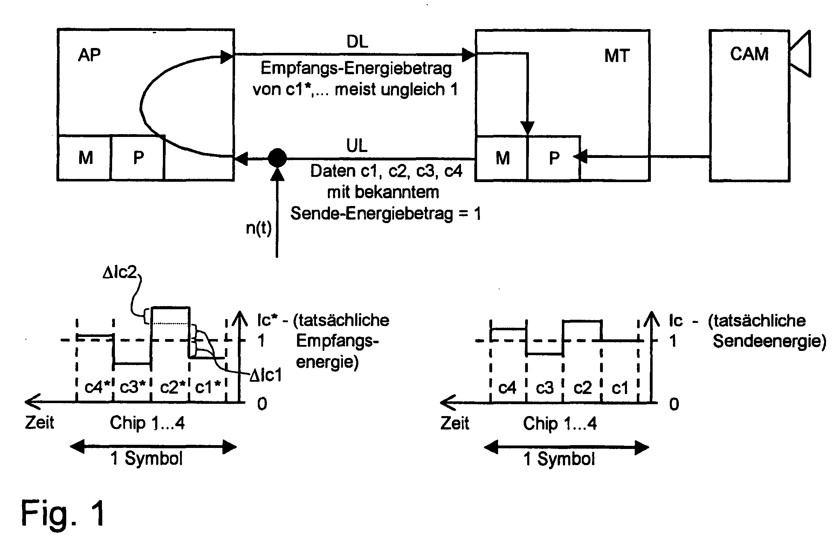

Ein Ausführungsbeispiel wird nachfolgend anhand der Zeichnung näher erläutert. Es zeigt
- Fig. 1: eine Anordnung mit einer Kommunikations-Schnittstelle und einer darüber Daten sendenden Station sowie einer diese Daten empfangenden Station mit unterhalb der Stationen abgebildeten Leistungswerten von aufeinanderfolgend gesendeten Datenwerten.

Während bei typischen Kommunikationssystemen, insbesondere Funk-Kommunikationssystemen, netzseitig eine Vielzahl von verschiedenartigsten Einrichtungen bereitgestellt wird, um über einzelne Basisstationen bzw. Zugriffspunkte AP mit einer oder mehreren teilnehmerseitigen Stationen MT zu kommunizieren, ist das nachfolgend beschriebenen Verfahren bereits schon bei der Kommunikation zwischen zwei einzelnen Stationen AP, MT anwendbar, wie dies in Figur 1 dargestellt ist.

Beim vorliegenden Ausführungsbeispiel liegen in einer ersten, z.B. teilnehmerseitigen Station MT, die nachfolgend als sendende Station MT bezeichnet wird, Daten c1...c4 vor, die über eine Funkschnittstelle V zu einer mit der sendenden Station MT kommunizierenden Station AP zu senden sind. Diese Daten c1...c4 empfangende Station AP wird nachfolgend zur besseren Unterscheidung als empfangende bzw. zurücksendende Station AP (AP: Access Point) bezeichnet. Auf der Schnittstelle V, die vorzugsweise als Funk-Schnittstelle ausgebildet ist, werden Übertragungen in Vorwärtsrichtung UL (Uplink) von der sendenden Station MT zu der empfangenden Station AP übertragen, beispielsweise über einen Aufwärtsverbindungskanal eines Kommunikationssystems. Weiterhin werden über die Schnittstelle V in Rückwärtsrichtung DL (Downlink), insbesondere über einen Abwärtsverbindungskanal eines Kommunikationssystems, Daten bzw, Informationen von der empfangenden Station AP zu der sendenden bzw. ursprünglich sendenden Station MT zurückgesendet. Die Begriffe Daten, Informationen und Signalisierung sind in der Regel allgemein verwendbar. Sie stehen ohne beabsichtigte Beschränkung für einen Verkehr bzw. eine Kommunikation zwischen zwei Stationen.

Die eigentliche Datenquelle kann verschiedenartig ausgebildet sein, beispielsweise aus einem Mikrofon zur Aufnahme von Sprachdaten bestehen, kann insbesondere aber auch aus einer optischen Aufnahmeeinrichtung zur Aufnahme von Bildern oder Bildsequenzen bestehen. Insbesondere im Fall einer optischen Aufnahmeeinrichtung ist es auch möglich, die sendende Station MT mit einer Kamera CAM zum Aufnehmen von Bildern über eine entsprechende Schnittstelle zu koppeln, oder eine derartige Kamera CAM direkt mit einer entsprechenden derart sendenden Kommunikationsvorrichtung bzw. Station MT auszustatten.

Dies ermöglicht es, von der Kamera CAM aufgenommene Bilder bzw. deren Daten direkt oder nach einer Zwischenspeicherung zu einer entsprechend geeigneten Einrichtung im Kommunikationsnetz zu senden. Eine solche Einrichtung kann beispielsweise ein Monitor für Überwachungszwecke sein, kann aber auch ein großer Speicher sein, in dem eine Vielzahl derartiger Bilder oder Bilder mit extrem hoher Auflösung und entsprechend extrem hoher Datenrate abgespeichert werden können. Die Kamera CAM ist dadurch nicht auf die Aufnahme von Bildern bis zum Auffüllen ihres eigenen Speichers beschränkt. Besonders vorteilhaft ist eine Ausführungsform, bei der die Bilddaten, die von der Kamera CAM aufgenommen werden, über die sendende Station MT, die Funkschnittstelle V und eine empfangende Station AP übertragen werden, wobei die empfangende Station AP ihrerseits einen Zugang zu z.B. dem Internet ermöglicht, um die Daten in einem Format gemäß dem Internetprotokoll (IP) weiterzuleiten, wobei in einer besonders vorteilhaften Ausführungsform die letztendlich empfangende Einrichtung der persönliche Computer (PC) derjenigen Personen sein kann, welche die Kamera CAM bedient.

Bei dem nachfolgend beschriebenen Verfahren wird davon ausgegangen, dass die Verbindung, insbesondere Funkverbindung in Abwärtsrichtung bzw. Rückwärtsrichtung von der ursprünglich empfangenden Station AP zu der ursprünglich sendenden Station MT relativ gut ist. Eine relativ gute Verbindung kann dadurch erzielt werden, dass sich die sendende Station MT nahe bei der empfangenden Station AP befindet, dass die empfangende Station für Zurücksendungen eine sehr hohe Sendeleistung Ic* verwendet und/oder das für die Zurücksendung in Rückwärtsrichtung von der empfangenden Station AP zu der ursprünglich sendenden Station MT spezielle Kodierungs- oder Redundanzverfahren verwendet werden.

Der größte Anteil des Energieverbrauchs bei einer Übertragung von Daten findet typischerweise im Hochfrequenz-Teil, dass heißt im Leistungsverstärker der Sendeeinrichtung statt. Insbesondere im Fall von Ein-Chip-Lösungen kann die erforderliche Leistung für die Datenverarbeitung im Vergleich mit der erforderlichen Verstärkungsleistung üblicherweise vernachlässigt werden. Während die netzseitigen Stationen bei Kommunikationssystemen üblicherweise von einem Festnetzanschluss eine ausreichende Leistungszufuhr verfügen, so dass der Leistungsverbrauch nur ein unteres Kriterium darstellt, ist der Leistungsverbrauch bei mobilen Stationen mit einer mitgeführten Energiequelle nicht vernachlässigbar.

Bei dem hier betrachteten Ausführungsbeispiel soll daher die Sendeleistung Ic von der mobilen, teilnehmerseitigen sendenden Station MT zu der empfangenden, insbesondere netzseitigen Station AP weit möglichst minimiert werden, während in umgekehrter Richtung für die Zurücksendung von Daten und Informationen eine Leistungsbeschränkung nicht erfolgen soll oder zur Sicherstellung einer fehlerfreien Übertragung sogar eine besonders hohe Energie für die Aussendung von Daten verwendet werden soll.

Insbesondere kann es vorteilhaft sein, wenn der rückwärtsgerichtete Kanal von der ursprünglich empfangenden Station AP zu der ursprünglich sendenden Station MT im Vergleich zu den bekannten Fehlerkorrekturverfahren, also beispielsweise im Vergleich zu einem niedrig datenratigen ARQ-Kanal, zu einem Kanal mit hoher oder sehr hoher Datenrate erweitert wird. Dies ermöglicht, in Rückwärtsrichtung von der ursprünglich empfangenden Station AP zu der ursprünglich sendenden Station MT die zuvor empfängerseitig bestimmten analogen Leistungswerte der empfangenen Daten bzw. Datensymbole zum ursprünglichen Sender zurück zu übertragen. Zwar wird durch diese Verfahrensweise die spektrale Gesamteffektivität des Kommunikationssystems deutlich herabgesetzt, da der hohe Anteil von Daten in dem rückwärts gerichteten Kanal DL die Übertragung nützlicher Daten blockiert, jedoch kann vorteilhafterweise mit der weiterhin beschriebenen Vorgehensweise der Leistungsverbrauch in der ursprünglich sendenden Station MT deutlich herabgesetzt werden, was von hohem Wert für bestimmte Anwendungen ist.

Gemäß dem bevorzugten Ausführungsbeispiel werden, wie dies in der Figur dargestellt ist, Daten c in einem ersten Schritt als Datenwert c1 mit einer bestimmten Sendeleistung, z.B. Ic1 = 1, ausgesendet. Während der Übertragung über die Schnittstelle V in Vorwärtsrichtung UL wirkt auf die übertragenen gesendeten Daten c1 ein Störsignal n(t) ein. Bei dem Störsignal n(t) kann es sich sowohl um statistisches, sogenanntes weisses Rauschen, aber auch um elektromagnetische Störeinflüsse anderer elektromagnetisch aussendender Leistungsquellen handeln.

Bei der empfangenden Station AP wird somit anstelle des gesendeten Datenwerts c1 mit einer Sendeleistung Ic1 = 1 ein Datenwert c1* mit einer empfangenen Empfangssignalleistung Ic1* empfangen, wobei diese Empfangsleistung Ic1* in der Regel durch den Einfluss des Störsignals n(t) ungleich 1 ist, d.h. Ic1* <> 1. In der empfangenden Station AP wird der entsprechende analoge Leistungswert Ic1* zu dem empfangenen Datenwert c1* bestimmt und über die Schnittstelle V in Rückwärtsrichtung DL zu der ursprünglich sendenden Station MT zurückgesendet. Dazu wird der analoge Leistungswert Ic1* zweckmäßigerweise in einen digitalen Wert umgewandelt, der dann als digitales Signal zurückgesendet wird.

In der ursprünglich sendenden Station MT wird der empfangene, zurückgesendete analoge Leistungswert Ic1* mit dem Sendeleistungswert Ic1 verglichen und die Leistungsdifferenz ΔIc1 bestimmt.

In einem zweiten Schritt zum Übertragen des ursprünglichen Datenwertes c1 wird eine Sendeleistungskorrektur unter Berücksichtigung der bestimmten Leistungsdifferenz ΔIc1 vorgenommen. Nachfolgend wird dazu bei dem bevorzugten Ausführungsbeispiel der ursprüngliche Datenwert c1 zuzüglich der bestimmten Differenzleistung ΔIc1 zu einem Korrekturdatenwert c2 zusammengesetzt, wobei die Leistungsdifferenz ΔIc1 im Fall einer empfängerseitig ursprünglich zu gering empfangenen Leistung Ic1* bei der Bildung des Datenkorrekturwertes c2 hinzugefügt wird, während sie im Fall einer empfängerseitig zu hoch empfangenen Leistung Ic2* bei der Erzeugung des Datenkorrekturwertes c2 abgezogen wird. Ein derart erzeugter Datenkorrekturwert c2 wird nachfolgend von der sendenden Station MT zu der empfangenen Station AP in Vorwärtsrichtung UL über die Schnittstelle V gesendet. Seine Sendeleistung ist bestimmt durch die Sendeleistung beim vorherigen Aussenden zuzüglich/abzüglich der empfangenen Leistungsdifferenz, also Ic2 = Ic1 + ΔIc1.

Die empfangende Station behandelt den nunmehr empfangenen Datenkorrekturwert c2* so, wie zuvor den Datenwert c1*, dass heisst sie bestimmt wiederum einen analogen Leistungswert, und sendet diesen digitalisiert in Rückwärtsrichtung DL zu der sendenden Station MT zurück. In dieser wird wiederum die Leistungsdifferenz ΔIc2 zwischen dem empfangenen Leistungswert Ic2* und dem gesendeten Leistungswert Ic2 = (Ic1* + ΔIc1) bestimmt, um senderseitig einen weiteren Datenkorrekturwert c3 zu bilden.

Empfängerseitig werden die empfangenen Daten c1* und Datenkorrekturwerte c2*-c4* zur Erzeugung des ursprünglich gesendeten Datenwertes c1 gemeinsam verarbeitet. Besonders zweckmäßig ist dabei das Addieren der Daten c1* und der Datenkorrekturwerte c2*-c4* und das anschließende Dividieren durch die Anzahl der addierten Werte. Dieses, allgemein auch als Stapeln bezeichnete Verfahren ergibt einen Datenwert, der von Einflüssen durch Störsignale n(t) weitestgehend bereinigt ist. Je mehr Daten c1 und Datenkorrekturwerte c2-c4 von der sendenden Station MT zu der empfangenen Station AP übertragen werden, desto genauer kann der ursprünglich gesendete Datenwert c1 empfängerseitig rekonstruiert werden. Zweckmäßigerweise wird die Anzahl der insgesamt vorzunehmenden Sendungen von Daten und Datenkorrekturwerten jedoch auf eine vorgegebene Anzahl begrenzt, die 1 Symbol bildet, dass aus im dargestellten Ausführungsbeispiel 4 Daten und Datenkorrekturwerten bzw. sogenannten Chips 1-4 besteht. Insbesondere sollte berücksichtigt werden, dass mit zunehmender Anzahl von Übertragungen insgesamt ein erhöhter statt ein reduzierter Leistungsverbrauch zu verzeichnen ist.

Während bei dem dargestellten Ausführungsbeispiel eine Korrektur für den zuletzt gesandten Datenkorrekturwert c4 nicht vorgenommen werden kann, besteht für den Fall, dass die Störsignale n(t) nicht lediglich einem statistischen Rauschen entsprechen sondern beispielsweise einen linearen Trend oder additiven Zusatz enthalten, auch eine statistische Auswertung möglich, um für insbesondere den zuletzt zu übertragenden Datenkorrekturwert c4 eine voraussichtliche Verzerrung durch das Störsignal n(t) vorauszubestimmen und bei der Erzeugung des Datenkorrekturwertes c4 zu berücksichtigen. Derartige Vorauskorrekturen können natürlich auch auf die anderen Datenkorrekturwerte c2, c3 angewendet werden. Eine Anwendung von zuvor bestimmten nicht statistischen Korrekturwerten ist insbesondere auch auf später zu versendende Datenwerte anderer Daten bzw. anderer Symbole möglich.

Zu dem dargestellten Ausführungsbeispiel ist eine Vielzahl alternativer Ausführungsformen möglich, von denen nachfolgend nur einzelne beschrieben werden.

Anstelle jeweils einen Datenwert bzw. Daten c1 und direkt nachfolgend dazu gehörende Datenkorrekturwerte c2-c4 in Aufwärtsrichtung UL zu senden können auch beliebige Schemata eingeführt werden, bei denen zwischen dem Aussenden des dazugehörenden ersten Datenkorrekturwertes c2 bzw. weiterer Datenkorrekturwerte c3, c4 jeweils Daten und Datenkorrekturwerte anderer Ursprungsdaten gesendet werden. Dadurch kann die Zeit genutzt werden, die für das Übertragen, das empfängerseitige Bestimmen der analogen Leistung und das Rückübertragen sowie das senderseitige Bestimmen eines Datenkorrekturwertes erforderlich ist, indem andere Daten bzw. Datenkorrekturwerte zwischenzeitlich gesendet werden.

Während beim vorstehend beschriebenen Ausführungsbeispiel die bestimmte Leistungsdifferenz verwendet wurde, um einen Datenkorrekturwert durch Addition des ursprünglichen Datenwertes c1 und des Leistungsdifferenzwertes ΔIc1 zu bilden, ist es auch möglich, lediglich den Differenzbetrag ΔIc1 als Datenkorrekturwert zu der empfangenden Station AP zu übertragen. In dieser würde dann nicht eine Addition der empfangenen Werte und nachfolgend Division durch die Anzahl der addierten Werte vorgenommen werden, sondern es würde lediglich eine Addition sämtlicher zusammengehörender Daten und Datenkorrekturwerte gemeinsamen Datenursprungs vorgenommen werden, um den ursprünglichen Datenwert c1 hinsichtlich seiner ursprünglichen Leistung Ic1 zu rekonstruieren.

In vergleichbarer Art und Weise können auch Korrekturfaktoren und dergleichen bestimmt und angewendet werden.

Um bei der Übertragung der analogen Leistungswerte Ic1*-Ic3* die von Störsignalen n(t) möglichst ungestörte Übertragung sicherzustellen, gibt es verschiedene Möglichkeiten. Einerseits kann die Sendeleistung für die Rückwärtssendung DL so hoch gewählt werden, dass die Einwirkung von Störsignalen n(t) vernachlässigbar wird. Andererseits können aber auch verschiedene der für sich bekannten Korrekturverfahren verwendet werden, die wiederholte Sendungen mit redundanten Daten oder kodierten Daten verwenden.

Die Vorgehensweise beim Senden der Daten c1 und Datenkorrekturwerte c2-c4 von der sendenden Station MT zu der empfangenden Station AP ist ungefähr vergleichbar mit der Situation eines CDMA-Verfahrens (Code Division Multiple Access), bei dem nur ein einziger Wiederholungscode für alle Chips verwendet wird.

Möglich sind insbesondere auch Kombinationen des vorstehend beschriebenen Verfahrens mit zusätzlichen Datenübertragungs-Sicherungsverfahren bzw. Fehlerkorrekturverfahren, so dass die Übertragungssicherheit weiter erhöht wird. Sofern die vorstehend beschrieben Korrekturen bei gleichbleibender Sendeenergie bzw. Sendeleistung Ic nicht ausreicht, ist es auch möglich, die von der sendenden Station MT allgemein verwendete Sendeenergie Ic für Neuübertragungen zusätzlich zu erhöhen. Dies kann insbesondere automatisiert werden, indem bei der Bestimmung von Differenzleistungswerten ΔI für den Fall, dass erhöhte Leistungsdifferenzen ΔI festgestellt werden, automatisch die Basis-Sendeleistung erhöht wird. Umgekehrt kann die Basis-Sendeleistung Ic automatisch verringert werden, wenn bei der Bestimmung der Leistungsdifferenzen festgestellt wird, dass nur minimale oder vernachlässigbare Leistungsdifferenzen zwischen den gesendeten und den empfangenen Daten zu verzeichnen sind.

Ein Einsatz des vorstehend beschriebenen Verfahrens ist insbesondere bei bestehenden Funk-Kommunikationsssytemen zweckmäßig, bei denen oftmals die Verbindungen in Abwärtsrichtung von einer netzseitigen Station zu einer teilnehmerseitigen Station für die Übertragung größerer Datenmengen als in umgekehrter Richtung ausgelegt sind. Dies gilt insbesondere für den Bereich des Internets, bei dem von einzelnen teilnehmerseitigen Stationen MT über die entsprechenden Zugriffspunkte bzw. netzseitigen Stationen AP große Datenmengen von entfernten Datenquellen abgerufen werden. Bei derartigen Systemen ist es insbesondere auch nicht sehr nachteilhaft, dass die Umwandlung der empfängerseitig empfangenen Leistungswerte in analoge Daten und deren Übertragung als digitalisierte Daten eine in der Regel höhere Datenmenge für die Rückübertragung erforderlich macht, als an Daten in Vorwärtsrichtung zu übertragen ist.

In der Rückwärtsrichtung DL können insbesondere auch hochentwickelte und aufwendige Modulationsverfahren verwendet werden, um die bestimmten analogen Empfangs-Leistungswerte Ic1*-Ic3* zu den empfangenen Datenwerten c1*-C3* vernachlässigbar gestört zurück zu übertragen. In der ursprünglich sendenden Station MT können die auf diese Art und Weise sicher empfangenen Daten mit einem geringem zusätzlichen Leistungsaufwand verarbeitet werden, der im Vergleich zu der eingesparten Sendeleistung vernachlässigbar ist, da die Demodulierung der empfangenen zurückübertragenen Daten in der ursprünglich sendenden Station MT mit einer nur geringen Zusatzleistung für die Datenverarbeitung möglich ist.

Nachfolgend wird zu dem vorstehend beschriebenen Ausführungsbeispiel zur weiteren Verdeutlichung eine Beschreibung mit entsprechenden Zahlenwerten gegeben. Während der gesendete Datenwert c1 mit einem normierten Leistungswert von Ic1 = 1,0 übertragen wurde, wurde empfängerseitig durch den Einfluss des additiven Rauschens bzw. Störsignals n(t) ein Datenwert c1* mit einem Empfangsleistungswert Ic1* = 0,7 empfangen. Dieser Leistungswert 0,7 wird über den Rückwärtskanal DL zu der sendenden Station MT zurückgeführt. Diese sendet dann nach Bestimmung der Leistungsdifferenz ΔIc1 = 0,3 als Datenkorrekturwert c2 einen Datenkorrekturwert mit einer entsprechend erhöhten Sendeleistung Ic2 = 1,3 anstelle der üblichen Sendeleistung I = 1,0. Diese Vorgehensweise mit einer Vielzahl von entsprechend korrigierten Werten entspricht einem Wiederholungscode, das heisst die letztendliche Symbolerfassung bzw. Auswertung findet nur statt, wenn alle einzelnen Chips bzw. Daten und Korrekturwerte oder das vollständige Codewort empfangen wurden.

Dies reduziert zwar die mögliche Datenrate beim Senden von der Sendestation MT mit zunehmender Anzahl von Chips c1-c4, im Falle eines Systems wie HiperLAN2 mit sehr hohen Datenraten von z. B. 54Mbit/s ist es jedoch trotzdem möglich, Übertragungsraten von mehreren Mbit/s zu erzielen, was auch die Übertragung eines Bildes von einer digitalen Kamera zum Zugriffspunkt bzw. der empfangenden Station AP in wenigen Sekunden ermöglicht.

Zweckmäßigerweise kann die Anzahl der verwendeten Chips abhängig von der gewünschten Sendeleistung und der gewünschten Datenrate individuell angepasst und gewählt werden. Dazu würde dann in einem ersten Schritt eine entsprechende Signalisierung an die empfängerseitige Station vorgenommen, so dass diese ebenfalls Kenntnis von der Anzahl und Abfolge der empfangenen Daten zu jeweils einem gemeinsamen Datenursprung erhält. Durch eine Änderung der Anzahl von Datenchips pro Symbol kann somit die erforderliche Sendeleistung entsprechend reduziert bzw. erhöht werden. Dabei wird zweckmäßigerweise mit berücksichtigt, dass ab einer gewissen Anzahl von Übertragungen für diese Übertragungen wiederum jeweils eine gewisse Sendeenergie erforderlich ist, so dass eine Minimierungsfunktion zu verwenden ist, um die jeweils ideale Kombination von Anzahl der Datenchips und einzelnen Sendeleistungen im Verhältnis zur Gesamtsendeleistung zu bestimmen.

Zweckmäßigerweise werden auch die Modulationen, Datenraten und Sendeleistungen für die Rückwärtsübertragung von der Empfängerseite zur Senderseite optimiert, um eine Störung der Übertragungen in Vorwärtsrichtung UL oder anderer Stationen in der Umgebung durch beispielsweise zu hohe Sendeleistungen in Rückwärtsrichtung DL zu vermeiden.

Erste Simulationen haben gezeigt, dass für die Übertragungen in Vorwärtsrichtung UL tatsächlich Sendeleistungen unterhalb der Shannon-Kapazität möglich sind. Dies wird durch die übertragene Rückinformation in Rückwärtsrichtung möglich, wobei für die Rückwärtsrichtung zweckmäßigerweise ein Abwärtsverbindungs-Kanal als neuer Superkanal eingeführt werden kann, der eine höhere Shannon-Kapazität hat, als der Aufwärtsverbindungskanal für sich genommen alleine.

Die vorgeschlagene Verfahrensweise ist insbesondere bei OFDM-Systemen (OFDM: Orthogonal Frequency Division Multiplex) einsetzbar, da OFDM die Dauer eines jeden Symbols verlängert. Daher kann die Zeit für die Rundlaufverzögerung zur Erfassung des empfangenen Signals und dessen grundlegender Signalverarbeitung und Übertragung in dem Rückwärtskanal DL soweit erhöht werden, wie dies erforderlich ist. Jeder Unterträger (Subcarrier) des OFDM-Symbols würde parallel gehandhabt, das heißt, würde jeweils einen eigenen Kanal in Rückwärtsrichtung DL erhalten. Für höhere Rundlaufverzögerungen ist es auch möglich, eine Schleife nicht mit dem jeweils nächsten sondern einem späteren Symbol zu bilden, das heißt, Symbol 1 wird in Aufwärtsrichtung UL übertragen, wobei die Rückwärtsinformation wird in einem Symbol 4 in dem entsprechenden Rückwärtskanal DL übertragen wird. Nach Symbol 1 würde Symbol 2 in Aufwärtsrichtung UL übertragen und die zugeordnete Rückwärtsinformation in dem Symbol 5 in Rückwärtsrichtung usw.

Der rückwärtsgerichtete Kanal DL überträgt digital kodierte analoge Werte, das heißt, der Quantisierungspegel ist von Interesse. Ein Verfahren zum Reduzieren des erforderlichen Quantisierungspegels besteht darin, den Quantisierungsfehler für jeden übertragenen Chip bzw. Datenwert und Datenkorrekturwert zu speichern und diesen Fehlerwert für den nächsten Wert im Rückwärtskanal DL zu berücksichtigen, so dass der Gesamtfehler reduziert wird.

Unter Leistungswert bzw. Empfangs-Leistungswert sind dabei insbesondere die empfängerseitig tatsächlichen Amplituden des empfangenen Signals zu verstehen. Daher werden auch Fälle berücksichtigt, bei denen anstelle eines positiven Empfangsleistungswertes ein Empfangsleistungswert mit negativer Amplitude empfangen bzw. erfasst wird. Insbesondere können auch positive und negative Amplituden beim Aussenden eines Signals richtig erfasst und durch das Verfahren verarbeitet werden. Insbesondere werden in Rückwärtsrichtung die Amplitudenwerte mit dem entsprechenden Vorzeichen übertragen.

## Patentansprüche

1. Verfahren zum Einstellen der Sendeleistung (Ic) einer sendenden Station (MT), bei dem
- die sendende Station (MT) ein Signal zur Übertragung von Daten (c1) zu einer empfangenden Station (AP) überträgt,
- die empfangende Station (AP) einen Messwert (c1*) des empfangenen Signals, der abhängig von den durch das Signal übertragenen Daten (c1) ist, bestimmt und zu der sendenden Station (MT) als Regelinformation für die Einstellung ihrer Sendeleistung (Ic) überträgt
- und die sendende Station (MT) nach dem Empfang des Messwertes (c1*) zuvor ausgesandter Daten (c1) Korrekturdaten (c2) zu diesen zuvor gesendeten Daten (c1) zu der empfangenden Station (AP) sendet, die abhängig vom jeweiligen Messwert (c1*) sind.

2. Verfahren nach Anspruch 1, bei dem
- die sendende Station (MT) aus dem Messwert (c1*) bestimmt, in welchem Maße die Sendeleistung (Ic1) der ursprünglich gesendeten Daten (c1) von der Empfangsleistung (Ic1*) der an der empfangenden Station (AP) empfangenen Daten (c1*) abweicht und
- nachfolgend Daten (c2) oder Datenkorrekturwerte (c2) mit entsprechender Sendeleistungskorrektur (ΔIc1) sendet.

3. Verfahren nach Anspruch 1 oder 2, bei dem
das Senden des Signals mit den Daten (c1) mit einer Sendeleistung (Ic1) unterhalb der Shannon-Kapazität durchgeführt wird, insbesondere das Zurücksenden des zugeordneten Messwertes (c1*) oberhalb der Shannon-Kapazität durchgeführt wird.

4. Verfahren nach einem vorstehenden Anspruch, bei dem
das Zurücksenden des Messwertes (c1*) derart durchgeführt wird, dass Störeinflüsse (n(t)) bei dessen Übertragung vernachlässigbar sind.

5. Verfahren nach Anspruch 3 oder 4, bei dem
das Zurücksenden des Messwertes (c1*) von der empfangenden Station (AP) mit einer wesentlich höheren Sendeleistung durchgeführt wird, als der Sendeleistung (Ic1) der ursprünglich sendenden Station (MT).

6. Verfahren nach Anspruch 3, 4 oder 5, bei dem das Zurücksenden des Messwertes (c1*) mit einem Kodierungs- und/oder Redundanzverfahren durchgeführt wird.

7. Verfahren nach Anspruch 1, bei dem
die Korrekturdaten (c2) einem Korrekturfaktor oder additiven Korrekturwert entsprechen.

8. Verfahren nach Anspruch 1, bei dem
die Korrekturdaten (c2) aus neu übersendeten ursprünglichen Daten (c1) bestehen.

9. Verfahren nach Anspruch 8, bei dem
die Korrekturdaten (c2) aus den ursprünglich gesendeten Daten (c1) mit einer additiven oder subtraktiven Leistungsdifferenz (ΔIc1) erzeugt und empfängerseitig (AP) die Korrekturdaten (c2) mit den ursprünglichen Daten (c1) verarbeitet werden, insbesondere damit addiert und durch die Zahl der addierten Werte geteilt werden.

10. Verfahren nach Anspruch 8 oder 9, bei dem
nach dem Senden von Daten (c1) diese bei Bedarf korrigierten Daten (c2, c3, c4) eine vorgegebene Anzahl von Malen wiederholt übertragen und empfängerseitig gemeinsam verarbeitet werden.

11. Verfahren nach einem der vorstehenden Ansprüche, bei dem der Messwert (c1*) ein Empfangs-Leistungs-Amplitudenwert der von der empfangenden Station (AP) mit dem Signal empfangenen Daten ist.

12. Verfahren nach Anspruch 11, bei dem
hinsichtlich Abweichung zwischen gesendeten Leistungs-Amplitudenwerten (Ic1) und empfangenen Leistungs-Amplitudenwerten (Ic1*) eine statistische Auswertung durchgeführt und für zukünftige Sendungen von Daten (c4) und/oder Datenkorrekturwerten berücksichtigt wird.

13. Empfangende Station (AP) für ein Kommunikationssystem, wobei die empfangende Station folgende Einrichtungen umfasst:
- eine Bestimmungseinrichtung zum Bestimmen eines Messwertes (c1*) eines empfangenen Signals, der abhängig von durch das Signal übertragenen Daten (c1) ist,
- eine Einrichtung zum Senden des Messwertes (c1*) zu einer das Signal sendenden Station (MT) als Regelinformation für die Einstellung der Sendeleistung (Ic) der sendenden Station (MT)
- und eine Einrichtung zum Empfangen von von der sendenden Station (MT) gesendeten Korrekturdaten (c2) zu den zuvor gesendeten Daten (c1), wobei die Korrekturdaten (c2) abhängig vom jeweiligen Messwert (c1*) sind

14. Sendende Station (MT) für ein Kommunikationssystem, wobei die sendende Station folgende Einrichtungen umfasst:
- eine Sendeeinrichtung zum Übertragen von Daten (c1) mittels eines Signals an eine empfangende Station (AP),
- eine Empfangseinrichtung zum Empfang eines Messwertes (c1*) des von der empfangenden Station empfangenen Signals, der abhängig von den durch das Signal übertragenen Daten (c1) ist,
- eine Einrichtung zum Einstellen der Sendeleistung (Ic), die den Messwert (c1*) als Regelinformation beim Einstellen der Sendeleistung berücksichtigt,
- und eine Einrichtung zum Senden von Korrekturdaten (c2) zu den zuvor übertragenen Daten (c1), wobei die Korrekturdaten (c2) abhängig vom jeweiligen Messwert (c1*) sind.

## Claims

1. Method for controlling the emission power (Ic) of a sending station (MT), in which
- the sending station (MT) transmits a signal for transmission of data (c1) to a receiving station (AP),
- the receiving station (AP) determines a measured value (c1*) of the received signal, which depends on the data transmitted by the signal (c1) and transmits it to the sending station (MT) as control information for controlling its emission power (Ic)
- and the sending station (MT), after receiving the measured value (c1*) of previously sent data (c1) sends correction data (c2) for this previously sent data (c1) to the receiving station (AP) which depends on the relevant measured value (c1*)

2. Method in accordance with claim 1, in which
- the sending station (MT) determines from the measured value (c1*) the extent to which the emission power (Ic1) of the originally sent data (c1) deviates from the reception power (Ic1*) of the received data (c1*) at the receiving station (AP) and
- subsequently sends data (c2) or data correction values (c2) with the appropriate emission power correction (ΔIc1).

3. Method in accordance with claim 1 or 2, in which
the sending of the signal with the data (c1) is undertaken with a emission power (Ic1) below the Shannon capacity, especially the sending back of the assigned measured value (c1*) is undertaken above the Shannon capacity.

4. Method in accordance with a preceding claim in which the measured value (c1*) is sent back in such a way as to make interference effects (n(t)) during its transmission negligible.

5. Method in accordance with claim 3 or 4, in which
the measured value (c1*) is sent back from the receiving station (AP) with a significantly higher emission power than the emission power (Ic1) of the original sending station (MT).

6. Method in accordance with claim 3, 4 or 5, in which the measured value (c1*) is sent back using an encoding or redundancy method.

7. Method in accordance with claim 1, in which
the correction data (c2) correspond to a correction factor or an additive correction value.

8. Method in accordance with claim 1, in which
the correction data (c2) exists as newly transferred data (c1).

9. Method in accordance with claim 8, in which
the correction data (c2) is created from the originally sent data (c1) with an additive or subtractive power difference (ΔIc1) and on the receiver side (AP) the correction data (c2) is processed with the original data (c1) especially added to it and divided by the number of added values.

10. Method in accordance with claim 8 or 9, in which
after data is sent (c1) this data which has been corrected if necessary (c2, c3, c4) is transmitted repeatedly a specified number of times and jointly processed on the receiver side.

11. Method in accordance with one of the previous claims, in which
the measured value(c1*) is a reception power amplitude value of the data received by the receiving station (AP) with the signal.

12. Method in accordance with claim 11, in which
as regards deviation between sent power amplitude values (Ic1) and received power amplitude values (Ic1*) a statistical evaluation is performed and taken into account for future transmissions of data (c4) and/or data correction values.

13. Receiving station (AP) for a communications system, with the receiving station including the following devices
- a device for determining a measured value (c1*) of a received signal which depends on the data (c1) transmitted by the signal,
- a device for sending the measured value (c1*) to a station sending the signal (MT) as control information for controlling the emission power (Ic) of the sending station (MT).
- and a device for receiving correction data (c2) sent from the sending station (MT) for the data sent previously (c1), with the correction data (c2) depending on the relevant measured value (c1*).

14. Sending station (MT) for a communications system with the sending station including the following devices
- a send device for transmitting data (c1) by means of a signal to a receiving station (AP),
- a receive device for receiving a measured value (c1*) of the signal received by the receiving station which is dependent on the data (c1) transmitted by the signal,
- a device for controlling the emission power (Ic), which takes account of the measured value (c1*) as control information when controlling the emission power
- and a device for sending correction data (c2) for the previously transmitted data (c1), with the correction data (c2) depending on the relevant measured value (c1*).

## Revendications

1. Procédé de réglage de la puissance d'émission (Ic) d'une station émettrice (MT), dans lequel
- la station émettrice (MT) transmet un signal vers une station réceptrice (AP) pour la transmission de données (c1),
- la station réceptrice (AP) détermine une valeur de mesure (c1*) du signal reçu, qui dépend des données (c1) transmises au moyen du signal, et la transmet à la station émettrice (MT) en tant qu'information de réglage pour le réglage de sa puissance d'émission (Ic)
- et la station émettrice (MT), après la réception de la valeur de mesure (c1*) de données (c1) émises auparavant, émet des données de correction (c2) à la station réceptrice (AP) pour ces données (c1) émises auparavant, qui dépendent de la valeur de mesure (c1*) respective.

2. Procédé selon la revendication 1, dans lequel
- la station émettrice (MT) détermine à partir de la valeur de mesure (c1*) dans quelle mesure la puissance d'émission (Ic1) des données (c1) émises initialement diffère de la puissance de réception (Ic1*) des données (c1*) reçues par la station réceptrice (AP) et,
- suite à cela, émet des données (c2) ou des valeurs de correction de données (c2) avec une correction de puissance d'émission correspondante (ΔIc1).

3. Procédé selon la revendication 1 ou 2, dans lequel
l'émission du signal avec les données (c1) est exécutée avec une puissance d'émission (Ic1) située en dessous de la capacité de Shannon, notamment l'émission en retour de la valeur de mesure affectée (c1*) située au-dessus de la capacité de Shannon est exécutée.

4. Procédé selon l'une quelconque des revendications précédentes, dans lequel
l'émission en retour de la valeur de mesure (c1*) est exécutée de telle manière que des influences perturbatrices (n(t)) sont négligeables lors de sa transmission.

5. Procédé selon la revendication 3 ou 4, dans lequel
l'émission en retour de la valeur de mesure (c1*) par la station réceptrice (AP) est exécutée avec une puissance d'émission nettement plus élevée que la puissance d'émission (Ic1) de la station initialement émettrice (MT).

6. Procédé selon la revendication 3, 4 ou 5, dans lequel l'émission en retour de la valeur de mesure (c1*) est exécutée au moyen d'un procédé de codage et/ou d'un procédé de redondance.

7. Procédé selon la revendication 1, dans lequel
les données de correction (c2) correspondent à un facteur de correction ou à une valeur de correction additive.

8. Procédé selon la revendication 1, dans lequel
les données de correction (c2) sont constituées de données initiales (c1) nouvellement émises.

9. Procédé selon la revendication 8, dans lequel
les données de correction (c2) sont générées à partir des données (c1) émises initialement au moyen d'une différence de puissance additive ou soustractive (ΔIc1) et les données de correction (c2) sont traitées, côté réception AP, avec les données initiales (c1), notamment y sont additionnées et divisées par le nombre des valeurs additionnées.

10. Procédé selon la revendication 8 ou 9, dans lequel
après l'émission de données (c1), ces données (c2, c3, c4) éventuellement corrigées sont transmises en étant répétées un nombre de fois prédéfini et sont traitées en commun côté réception.

11. Procédé selon l'une quelconque des revendications précédentes, dans lequel
la valeur de mesure (c1*) est une valeur d'amplitude de puissance de réception des données reçues par la station réceptrice (AP) au moyen du signal.

12. Procédé selon la revendication 11, dans lequel
une évaluation statistique est réalisée, en ce qui concerne un écart entre les valeurs d'amplitude de puissance émises (Ic1) et les valeurs d'amplitude de puissance reçues (Ic1*), et prise en compte pour les émissions futures de données (c4) et/ou de valeurs de correction de données.

13. Station réceptrice (AP) pour un système de communication, la station réceptrice comprenant les dispositifs suivants :
- un dispositif de détermination destiné à déterminer une valeur de mesure (c1*) d'un signal reçu qui dépend de données (c1) transmises par le signal,
- un dispositif pour l'émission de la valeur de mesure (c1*) vers une station (MT) émettant le signal, en tant qu'information de réglage pour le réglage de la puissance d'émission (Ic) de la station émettrice (MT)
- et un dispositif pour la réception de données de correction (c2) émises par la station émettrice (MT) pour les données (c1) émises auparavant, les données de correction (c2) dépendant de la valeur de mesure (c1*) respective.

14. Station émettrice (MT) pour un système de communication, la station émettrice comprenant les dispositifs suivants :
- un dispositif d'émission pour la transmission de données (c1) à une station réceptrice (AP) au moyen d'un signal,
- un dispositif de réception pour la réception d'une valeur de mesure (c1*) du signal reçu par la station réceptrice, qui dépend des données (c1) transmises par le signal,
- un dispositif pour le réglage de la puissance d'émission (Ic) qui tient compte de la valeur de mesure (c1*) en tant qu'information de réglage lors du réglage de la puissance d'émission,
- et un dispositif pour émettre des données de correction (c2) pour les données (c1) émises auparavant, les données de correction (c2) dépendant de la valeur de mesure respective (c1*).
